# EUROPEAN PATENT APPLICATION

(11) **EP 4 729 338 A1**
(43) Date of publication of application: **22.04.2026**
(21) Application number: 24207498.7
(22) Date of filing: 18.10.2024
(51) Int. Cl.: B60L 50/70, B60L 58/30, B60L 58/33, H01M 8/04537, H01M 8/04701, H01M 10/633

(54) **MANAGING DEGRADATION IN HOT MODE OPERATION OF A FUEL CELL VEHICLE**

(71) Applicant: Volvo Truck Corporation, 405 08 Göteborg (SE)
(72) Inventor: BLOMGREN, Fredrik, 425 35 Hisings Kärra (SE); HINDI, Gustavo, 449 50 Alafors (SE); DESAI, Parthav, 417 28 Göteborg (SE)
(74) Representative: Valea AB

(57) **Abstract**

A system and method of controlling operation of a fuel cell vehicle comprising a fuel cell system comprising a fuel cell stack. The method comprises obtaining route data of a route for the vehicle that comprises at least one section of the route wherein switching from a hot operating mode to a normal operating mode can be performed; when a state of health (SoH) of the fuel cell stack is within a target SoH and the vehicle assumes the hot operating mode, controlling the vehicle to either assume the normal operating mode or remain operating in the hot operating mode during the section of the route, based on an expected degradation of the fuel cell stack due to switching between the hot and normal operating modes and an expected degradation of the fuel cell stack due to the vehicle remaining operating in the hot operating mode when passing the section of the route.

## Description

### TECHNICAL FIELD

The disclosure relates generally to managing degradation of a fuel cell system of a fuel cell vehicle during a hot operating mode of the fuel cell vehicle.

The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A fuel cell is an electro-chemical device that includes an electrolyte sandwiched between two electrodes such as an anode and a cathode. Solid polymer electrolyte fuel cells, which employ a proton exchange, solid polymer membrane electrolyte, electrochemically convert reactants - fuel such as hydrogen received at the anode or anode side, and oxidant such as oxygen or air received at the cathode or cathode side, to generate electric power. Two or more fuel cells are usually arranged together into a fuel cell stack, in order to provide a higher output voltage. One or more fuel cell stacks may form a fuel cell system. Proton exchange membrane (PEM) fuel cells are considered well suitable for vehicular applications e.g. in fuel cell electric vehicles (FCEVs).

A fuel cell system includes a cooling system that comprises a coolant circulating therein that is passed through a fuel cell stack of the fuel cell system to maintain a temperature of the fuel cells. When a fuel cell vehicle requests increased power from its fuel cell system, e.g., at long steep climbs, the fuel cell system generates a lot of heat in the coolant of the cooling system and cooling the fuel cell vehicle becomes difficult. Hot ambient temperatures exacerbate the task of keeping the fuel cell system at a desired temperature. Furthermore, a high heat generation or energy loss at high fuel cell system powers entails an increased fuel consumption. Thus, performance of a FCEV during long and steep climbs, or in other cases at which a power demand on the fuel cell system increases, may be a major limiting factor that leads to increase in cost of the vehicle and/or decrease in performance and fuel economy.

Various methods have been proposed for controlling operation of the fuel cell vehicle during periods of a higher power demand on the fuel cell system. However, a need remains for improved methods for controlling operation of the fuel cell vehicle.

### SUMMARY

According to a first aspect of the disclosure, a fuel cell vehicle is provided that comprises a fuel cell system comprising at least one fuel cell stack configured to generate traction power for the vehicle, a cooling system configured to pass a coolant through the fuel cell stack to dissipate heat generated by the fuel cell stack, and a vehicle controller. The vehicle controller comprises processing circuitry that is configured to determine a required value of a current or predicted traction power for the vehicle; obtain a state of health (SoH) of the fuel cell stack; provide a first instruction to the vehicle to assume a hot operating mode in which a coolant inlet temperature of the coolant passing through the cooling system comprises a hot coolant temperature; provide a second instruction to the vehicle to assume a normal operating mode in which the coolant inlet temperature of the coolant passing through the cooling system comprises a normal coolant temperature, wherein the hot coolant temperature is higher than the normal coolant temperature, obtain route data of a route for the vehicle, the route data comprising at least one section of the route wherein switching from the hot operating mode to the normal operating mode can be performed while the fuel cell system can generate the required value of a traction power for the vehicle for the at least one section of the route. When it is determined that the SoH of the fuel cell stack is within a target SoH and the vehicle assumes the hot operating mode, the processing circuitry is configured to, in response to determining that an expected degradation of the fuel cell stack due to switching between the hot operating mode and the normal operating mode when passing the at least one section of the route is lower than an expected degradation of the fuel cell stack due to the vehicle remaining operating in the hot operating mode when passing the at least one section of the route, provide the second instruction to the vehicle to assume the normal operating mode during the at least one section of the route.

The at least one section of the route may comprise at least one lower power demand portion wherein a power demand from the fuel cell system may be lower than in other portions of the at least one section of the route.

The first aspect of the disclosure may seek to control a fuel cell power during the hot operating mode of the vehicle in which the temperature of the coolant is increasing to increase a traction power available to the fuel cell vehicle and/or to improve fuel consumption. A technical benefit may include improved performance of the fuel cell vehicle at portions of a route where increased power may be requested from the fuel cell system, e.g., at ascending portions of the route, thereby the overall performance of the fuel cell vehicle is improved. A further technical benefit may include decreasing or minimizing degradation of the fuel cell system, due to balancing the degradation of the fuel cell system during the hot operating mode while making a decision whether to switch to the normal operating mode. Thus, a fuel consumption and the overall cost of operating the fuel cell vehicle may be advantageously decreased.

In some examples, the processing circuitry may be further configured to, in response to determining that the expected degradation of the fuel cell stack due to switching between the hot operating mode and the normal operating mode when passing the at least one section of the route is greater than or equal to the expected degradation of the fuel cell stack due to the fuel cell vehicle remaining operating in the hot operating mode when passing the at least one section of the route, control the fuel cell vehicle to maintain the hot operating mode during the at least one section of the route.

In some examples, the processing circuitry may be further configured to, in response to determining that the expected degradation of the fuel cell stack due to switching from the hot operating mode to the normal operating mode when entering the lower power demand portion of the at least one section of the route and switching from the normal operating mode to the hot operating mode when exiting the lower power demand portion of the at least one section of the route is lower than the expected degradation of the fuel cell stack due to the fuel cell vehicle remaining operating in the hot operating mode when passing the at least one section of the route, provide the second instruction to the fuel cell vehicle to assume the normal operating mode during the at least one section of the route.

In some examples, providing the second instruction to the fuel cell vehicle to assume the normal operating mode during the at least one section of the route comprises providing the second instruction to the fuel cell vehicle to assume the normal operating mode during the at least one lower power demand portion of the at least one section of the route.

In some examples, the processing circuitry may be further configured to, in response to determining that the expected degradation of the fuel cell stack due to switching from the hot operating mode to the normal operating mode when entering the lower power demand portion of the at least one section of the route and switching from the normal operating mode to the hot operating mode when exiting the lower power demand portion of the at least one section of the route is greater than or equal to the expected degradation of the fuel cell stack due to the fuel cell vehicle remaining operating in the hot operating mode when passing the at least one section of the route, control the fuel cell vehicle to maintain the hot operating mode during the at least one section of the route. Controlling the fuel cell vehicle to maintain the hot operating mode during the at least one section of the route comprises controlling the fuel cell vehicle to maintain the hot operating mode during the at least one lower power demand portion of the at least one section of the route.

In some examples, the processing circuitry may be further configured to provide the first instruction to the fuel cell vehicle to assume the hot operating mode when exiting the lower power demand portion of the at least one section of the route.

According to a second aspect of the disclosure, a method of controlling operation of a fuel cell vehicle is provided. The fuel cell vehicle comprises a fuel cell system comprising at least one fuel cell stack configured to generate traction power for the fuel cell vehicle, and a cooling system configured to pass a coolant through the fuel cell stack to dissipate heat generated by the fuel cell stack. The method comprises determining a required value of a current or predicted traction power for the fuel cell vehicle; obtaining a SoH of the fuel cell stack; obtaining route data of a route for the fuel cell vehicle, the route data comprising at least one section of the route wherein switching from a hot operating mode to a normal operating mode can be performed while the fuel cell system can generate the required value of a traction power for the fuel cell vehicle for the at least one section of the route, wherein in the hot operating mode a coolant inlet temperature of the coolant passing through the cooling system comprises a hot coolant temperature, and in the normal operating mode the coolant inlet temperature comprises a normal coolant temperature, and wherein the hot coolant temperature is higher than the normal coolant temperature. The method also comprises, when it is determined that the SoH of the fuel cell stack is within a target SoH and the fuel cell vehicle assumes the hot operating mode, in response to determining that an expected degradation of the fuel cell stack due to switching between the hot operating mode and the normal operating mode when passing the at least one section of the route is lower than an expected degradation of the fuel cell stack due to the fuel cell vehicle remaining operating in the hot operating mode when passing the at least one section of the route, providing a second instruction to the fuel cell vehicle to assume the normal operating mode during the at least one section of the route.

The at least one section of the route may comprise at least one lower power demand portion wherein a power demand from the fuel cell system may be lower than in other portions of the at least one section of the route.

The second aspect of the disclosure may seek to control a fuel cell power during the hot operating mode of the vehicle in which the temperature of the coolant is increasing to increase a traction power available to the fuel cell vehicle and/or to improve fuel consumption. A technical benefit may include improved performance of the fuel cell vehicle at portions of a route where increased power may be requested from the fuel cell system, e.g., at ascending portions of the route, thereby the overall performance of the fuel cell vehicle is improved. A further technical benefit may include decreasing or minimizing degradation of the fuel cell system, due to balancing the degradation of the fuel cell system during the hot operating mode while making a decision whether to switch to the normal operating mode. A fuel consumption and the overall cost of operating the fuel cell vehicle may be advantageously decreased.

In some examples, the method may comprise, in response to determining that the expected degradation of the fuel cell stack due to switching between the hot operating mode and the normal operating mode when passing the at least one section of the route is greater than or equal to the expected degradation of the fuel cell stack due to the fuel cell vehicle remaining operating in the hot operating mode when passing the at least one section of the route, controlling the fuel cell vehicle to maintain the hot operating mode during the at least one section of the route.

In some examples, the method may comprise, in response to determining that the expected degradation of the fuel cell stack due to switching from the hot operating mode to the normal operating mode when entering at least one lower power demand portion of the at least one section of the route and switching from the normal operating mode to the hot operating mode when exiting the at least one lower power demand portion of the at least one section of the route is lower than the expected degradation of the fuel cell stack due to the fuel cell vehicle remaining operating in the hot operating mode when passing the at least one section of the route, providing the second instruction to the fuel cell vehicle to assume the normal operating mode during the at least one section of the route.

In some examples, providing the second instruction to the fuel cell vehicle to assume the normal operating mode during the at least one section of the route comprises providing the second instruction to the fuel cell vehicle to assume the normal operating mode during the at least one lower power demand portion of the at least one section of the route.

In some examples, the method may comprise, in response to determining that the expected degradation of the fuel cell stack due to switching from the hot operating mode to the normal operating mode when entering the at least one lower power demand portion of the at least one section of the route and switching from the normal operating mode to the hot operating mode when exiting the at least one lower power demand portion of the at least one section of the route is greater than or equal to the expected degradation of the fuel cell stack due to the fuel cell vehicle remaining operating in the hot operating mode when passing the at least one section of the route, controlling the fuel cell vehicle to maintain the hot operating mode during the at least one section of the route. Controlling the fuel cell vehicle to maintain the hot operating mode during the at least one section of the route comprises controlling the fuel cell vehicle to maintain the hot operating mode during the at least one lower power demand portion of the at least one section of the route.

In some examples, the method may comprise providing the first instruction to the fuel cell vehicle to assume the hot operating mode when exiting the at least one lower power demand portion of the at least one section of the route.

In some examples, the method may comprise, when it is determined that the SoH of the fuel cell stack is within the target SoH and prior to obtaining the route data of the route for the fuel cell vehicle, determining whether an accumulated total time the fuel cell vehicle has assumed the hot operating mode is below an accumulated time threshold, and responsive to determining that the accumulated total time the fuel cell vehicle has assumed the hot operating mode is below the accumulated time threshold, estimating a percentage of a duration of time the fuel cell vehicle has assumed the hot operating mode over a total lifetime of the fuel cell vehicle. The route data may be obtained responsive to determining that the estimated percentage of the duration of time the fuel cell vehicle has operated in the hot operating mode over the total lifetime of the fuel cell vehicle is below a hot mode ratio threshold for the fuel cell vehicle.

In some examples, the method may comprise, prior to obtaining the SoH of the fuel cell stack and the route data, selecting the hot operating mode for the fuel cell vehicle when the required value of the traction power is above a traction power threshold, wherein selecting the hot operating mode further comprises selecting among a fuel saving operating mode of the fuel cell vehicle and an increased power operating mode of the fuel cell vehicle, wherein the fuel saving operating mode and the increased power operating mode are respective types of the hot operating mode.

In some examples, the method may comprise, when the fuel saving operating mode is selected, comparing an estimated benefit for fuel consumption by the fuel cell stack for an estimated duration of time for the fuel cell vehicle to operate in the fuel saving operating mode and a minimum fuel consumption decrease, and controlling the fuel cell vehicle to operate in the hot operating mode comprising the fuel saving operating mode when the estimated benefit for fuel consumption by the fuel cell stack is greater than the minimum fuel consumption decrease.

According to a third aspect of the disclosure, a vehicle controller for controlling the fuel cell vehicle is provided. The vehicle controller comprises processing circuitry that is configured to perform a method in accordance with any one or more examples of the present disclosure.

Advantages and effects of the vehicle controller are largely analogous to the advantages and effects of the method according to the examples herein. Further, all embodiments of the method are applicable to and combinable with all embodiments of the vehicle controller according to the examples herein, and vice versa.

According to a fourth aspect of the disclosure, a computer program product is provided that comprises computer-executable instructions, which, when executed by processing circuitry, cause the processing circuitry to perform a method in accordance with any one or more examples of the present disclosure.

Advantages and effects of the computer program are largely analogous to the advantages and effects of the method according to the examples herein. Further, all embodiments of the method are applicable to and combinable with all embodiments of the computer program according to the examples herein, and vice versa.

According to a fifth aspect of the disclosure, a tangible non-transitory computer-readable storage medium is provided that comprises computer-executable instructions, which, when executed by processing circuitry, cause the processing circuitry to perform a method in accordance with any one or more examples of the present disclosure.

Advantages and effects of the tangible non-transitory computer-readable storage medium are largely analogous to the advantages and effects of the method according to the examples herein. Further, all embodiments of the method are applicable to and combinable with all embodiments of the computer-readable storage medium according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** illustrates a side view of an example of a fuel cell vehicle in which a method in accordance with aspects of the present disclosure may be implemented, according to an example.
**FIG. 2** is a block diagram illustrating components of the fuel cell vehicle of FIG. 1, according to an example.
**FIGs. 3A** and **3B** are diagrams illustrating a fuel cell vehicle and a section of a route traveled by the fuel cell vehicle at which the fuel cell vehicle may be switched from operating in a hot operating mode to operating in a normal operating mode, according to an example.
**FIGs. 4A****,** **4B****,** and **4C** are flowcharts illustrating a method of controlling operation of a fuel cell vehicle, according to an example.
**FIG. 5** is a schematic diagram of a computer system for implementing examples disclosed herein, according to an example.

### DETAILED DESCRIPTION

A fuel cell system in a fuel cell vehicle such as a fuel cell electric vehicle (FCEV) may generate large amounts of heat which makes it challenging to maintain a temperature of the fuel cell system, particularly at high ambient temperatures. Performance of the fuel cell vehicle during period of increased demands on the fuel cell system may be improved by temporarily increasing a coolant temperature of a coolant circulating in a cooling system of the fuel cell vehicle. Increasing the coolant temperature, which is performed by increasing a target coolant inlet temperature at a coolant inlet of a fuel cell stack of the fuel cell system, may help managing heat generated by the fuel cell system, because when the coolant temperature is increasing, more heat can be added to the coolant than is removed by the cooling system. Another benefit is that as the coolant temperature increases, an efficiency of the cooling system increases, which makes it possible to increase a traction power such as power generated by the fuel cell system and available for a vehicle's propulsion/traction system and/or to decrease fuel consumption by the fuel cell vehicle.

However, a drawback of increasing the coolant temperature in the cooling system, such that the fuel cell vehicle assumes or operates in what is referred to herein as a hot operating mode, may be an accelerated degradation of the fuel cell system. The excessive degradation of the fuel cell system may occur due to drying out a fuel cell membrane in the fuel cell stack and also due to acceleration of electrode degradation processes. To minimize the time spent in the hot operating mode, one approach is to step out of the hot operating mode when it is not needed. However, every time a switch is made between the hot operating mode and a normal operating mode in which the target coolant temperature is set to a normal coolant temperature, there may be mechanical stress on the fuel cell membrane due to a change in water content, which causes undesirable swelling of the fuel cell membrane.

Accordingly, techniques in accordance with examples of the present disclosure provide a method of balancing degradation of the fuel cell system due to the vehicle operating in the hot operating mode and degradation due to switching from the hot operating mode to the normal operating mode. This is achieved by determining what is less damaging to the fuel cell system when there is a possibility to switch to the normal operating mode from the hot operating mode - to remain operating in the hot operating mode until the next time the hot operating mode is required, or to switch to the normal operating mode. If the decision is taken to remain in the hot operating mode because this would cause less degradation than switching to the normal operating mode, an additional advantage is improvement in fuel consumption by the fuel cell vehicle.

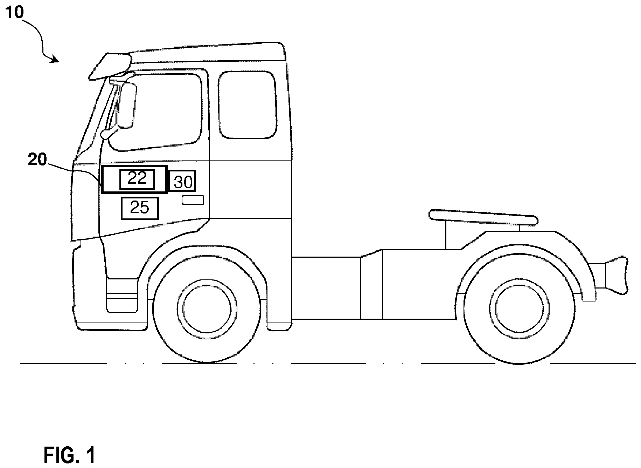

**FIG. 1** depicts a side view of a fuel cell vehicle 10 according to an example of the present disclosure. The fuel cell vehicle 10 is shown as a truck, such as a heavy-duty truck for towing one or more trailers (not shown). The fuel cell vehicle 10 may be a fuel cell electric vehicle (FCEV) or a hybrid vehicle comprising at least one fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the fuel cell vehicle 10 comprises a fuel cell system 20, which may comprise one or more fuel cell systems. The fuel cell system 20 may be used for powering one or more electric drive motors which are used for creating a propulsion force to the fuel cell vehicle 10. The fuel cell system 20 may additionally be used for powering other electric power consumers (not shown) of the vehicle 10, such as an electric motor for a crane, an electric motor for a refrigerator system, an electric motor for an air conditioning system, an electric motor for an electric heater, or any other electric power consuming function of the fuel cell vehicle 10. The fuel cell system 20 may be used for powering one or more power take-off (PTO) devices that are devices that transfer an electric motor's mechanical power to another piece of equipment.

The fuel cell system 20 comprises two or more fuel cells which together form a fuel cell stack 22 as shown schematically in FIG. 1. In examples herein, the fuel cell system 20 may comprise multiple fuel cell stacks 22, and any mention of the fuel cell stack 22 applies to two or more fuel cell stacks.

As also shown in FIG. 1, the fuel cell vehicle 10 comprises a cooling system 25 configured to pass a coolant through the fuel cell stack 22 of the fuel cell system 20 to dissipate heat generated by the fuel cell system 20 e.g. the fuel cell stack 22.

The fuel cell system 20 may include various components which are not shown herein. The fuel cell system 20 may comprise multiple fuel cell systems, and each fuel cell system may comprise its own control system, which may be communicatively connected to a controller or control unit.

The fuel cell vehicle 10 further comprises a vehicle control device or vehicle controller 30 configured to control the fuel cell system 20 in accordance with an example. The vehicle controller 30, also referred to herein as the control system 30, may control operation of various components of the fuel cell vehicle 10. The vehicle controller 30 may control a fuel cell controller e.g. fuel cell control unit (FCCU) configured to manage and control hydrogen and air processing, thermal and water management, and energy conversion in the fuel cell system 20. The vehicle controller 30 may in some examples comprise the fuel cell controller.

The vehicle controller 30 may be an on-board control system as shown in FIG. 1. It shall be understood that the vehicle controller 30 may also be a remote control system such as an off-board control system, or a combination of an on-board and off-board control system or systems.

The vehicle controller 30 may be configured to communicate with components of the fuel cell vehicle 10, e.g., the cooling system, by issuing control instructions or signals and by receiving status information relating to operation of the components. The vehicle controller 30 may be configured to receive information from various sensors, including one or more of temperature sensors, voltage sensors, moisture sensors, and other sensors included in or associated with the cooling system 25, the fuel cell system 20, and/or the vehicle 10. For example, one or more temperature sensors may be positioned such that they can acquire measurements of a temperature of the coolant in the cooling system 25. For example, a temperature sensor may measure an inlet coolant temperature of the coolant in the cooling system 25, at a coolant inlet of the fuel cell stack 22. Another temperature sensor may measure an outlet coolant temperature of the coolant in the cooling system 25, at a coolant outlet of the fuel cell stack 22.

The vehicle controller 30 may acquire data on a current location of the fuel cell vehicle 10, e.g. using a Global Positioning System (GPS) system. The vehicle controller 30 may be communicatively coupled to an internal database, an external database, or a combination thereof, to receive data related to a route traveled or to be traveled by the vehicle. The data related to the route may include a start point, an end point, and a path between the start and end points that is being traveled or expected to be traveled by the fuel cell vehicle 10. The vehicle controller 30 may store and/or may have access to data related to the route including terrain information e.g. inclination, altitude, speed limits, obstacles, etc. The vehicle controller 30 may also receive real-time, or close-to-real-time, information on the route including a traffic congestion, accident reports, road closures, construction, etc. The vehicle controller 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The vehicle controller 30 may further receive data from a weather service which may include data on actual and predicted ambient conditions and other types of data.

The vehicle controller 30 is an electronic control unit and may comprise processing circuitry which is adapted to execute a computer program comprising computer-executable instructions to perform a method according to aspects and examples of the present disclosure. The vehicle controller 30 may comprise hardware, firmware, and/or software for performing the method according to aspects and examples of the present disclosure. The vehicle controller 30 may be denoted a computer. The vehicle controller 30 may be constituted by one or more separate sub-units, and the vehicle controller 30 may communicate by use of wired and/or wireless communication technology.

The fuel cell vehicle 10 comprises various other components not shown in FIG. 1.

Although the present disclosure is described with respect to a fuel cell vehicle such as a truck, aspects of the present disclosure are not restricted to this particular vehicle, but may also be used in other fuel cell vehicles such as passenger cars, off-road vehicles, aircrafts and marine vehicles. The present disclosure may also be applied in vessels and in stationary applications, such as in grid-connected supplemental power generators or in grid-independent power generators.

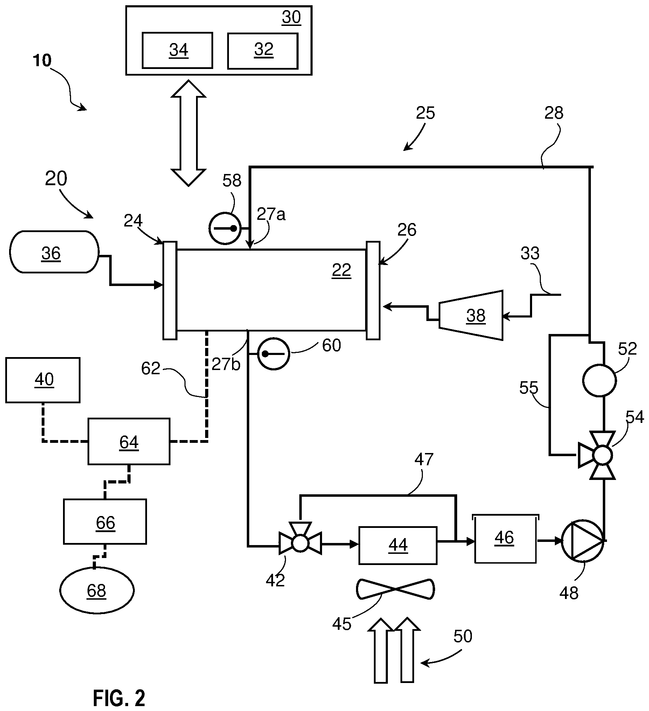

**FIG. 2** further illustrates an example of fuel cell system 20 in the fuel cell vehicle 10. As shown, the fuel cell system 20 comprises a fuel cell stack 22 comprising an anode side or anode 24, a cathode side or cathode 26, and an electrolyte (not shown) such as e.g. a proton exchange membrane (PEM) sandwiched between the anode 24 and the cathode 26. The fuel cell stack 22, which may comprise two or more stacks, is configured to receive hydrogen fuel and oxidant such as air or oxygen, and to generate electric energy or power through an electrochemical reaction between the hydrogen and the oxidant.

The anode 24 receives fuel such as hydrogen that can be supplied from a hydrogen storage device 36 e.g. a hydrogen container or tank. Any suitable source of hydrogen can be used. The cathode 26 receives air from the ambient environment, as shown by an arrow 33. The ambient air is pressurized or compressed by an air compressor 38. The air may also be also filtered and humidified. The air compressor 38 may be electrically driven and it may in some examples comprise an electric turbocharger (ETC) comprising a turbine and a compressor.

As shown in FIG. 2, the fuel cell vehicle 10 comprises an electrical storage system (ESS) 40 such as e.g. one or more batteries and/or one or more supercapacitors for storing electric energy, including excess electric energy produced by the fuel cell system 20. The ESS 40 may store energy generated by regenerative braking. The ESS 40 is configured to assist the fuel cell system 20 in supplying energy to an electric drive motor of the fuel cell vehicle 10, to meet power/energy demands of the fuel cell vehicle 10. The fuel cell system 20 and the ESS 40 can provide power to one or more auxiliary systems and devices of the fuel cell vehicle 10.

As shown in FIG. 2, the fuel cell vehicle 10 comprises a cooling system 25 configured to dissipate heat produced as a result of operation of the fuel cell system 20, including the electrochemical reaction in the fuel cell stack 22. Thus, the cooling system 25 is configured to pass the coolant through the fuel cell stack 22 to dissipate heat generated by the fuel cell stack 22.

In the example shown in FIG. 2, the cooling system 25 comprises a cooling circuit 28 configured to regulate the temperature of the fuel cell stack. The cooling circuit 28 circulates a coolant therein such that the coolant flows into the fuel cell stack 22 via a coolant inlet 27a and flows out of the fuel cell stack 22 via a coolant outlet 27b.

As shown in FIG. 2, the cooling circuit 28 may comprise a radiator 44, a coolant tank 46 for storing the coolant, a coolant pump 48 circulating the coolant, and a heater 52. The radiator 44 is configured and arranged so as to cool down the fuel cell stack 22. The radiator 44 may be in the form of a heat discharger that discharges heat to the outside environment by exchanging heat between the coolant and the outside environment i.e. external air schematically shown by arrows 50. The radiator 44 includes or is associated with a heat exchanger fan 45, also referred to herein as a cooling fan or a blower, that is configured to operate to supply cooling air to the radiator 44 and dissipate heat, to thereby regulate a temperature of the coolant.

The cooling fan 45 and the coolant pump 48 may be referred to as auxiliary cooling devices that are arranged and configured to assist in circulating the coolant in the cooling circuit 28 of the cooling system 25.

In some examples, the cooling circuit 28 may comprise a bypass valve 42 that is configured to be controlled to allow the coolant to flow to a bypass passage 47 through which the coolant flows by bypassing the radiator 44. The cooling circuit 28 may also comprise a bypass valve 54 that is configured to be controlled to allow the coolant to flow to a bypass passage 55 through which the coolant flows by bypassing the heater 52.

As further shown in FIG. 2, the fuel cell system 20 and/or the cooling system 25 comprise a first temperature sensor 58 configured to acquire measurements of a coolant temperature, also referred to as a coolant inlet temperature, at the coolant inlet 27a of the fuel cell stack 22. A second temperature sensor 60 may be used to acquire measurements of a coolant temperature referred to as a coolant outlet temperature, at the coolant outlet 27b of the fuel cell stack 22. The fuel cell system 20 and/or the cooling system 25 may comprise other temperature sensors.

The heater 52 may be used, e.g, in start-up conditions in cold climates or in other situations. In some implementations, the heater may be absent, and, e.g. a power of operation of the cooling fan 45 may be controlled to adjust the coolant temperature at the coolant inlet 27a of the fuel cell stack 22 in accordance with the target coolant inlet temperature set by the vehicle controller 30.

In the example of FIG. 2, electric power, shown schematically with a dashed line and labeled as 62, generated by the fuel cell stack 22 may be supplied to a junction box or unit 64, such as e.g. a high-voltage junction box. The power may be supplied to the junction unit 64 through a converter. The power may be supplied, via the junction unit 64, to an electric motor 66, also referred to as an electric traction motor or machine, for propelling one or more sets of wheels 68 of the vehicle 10. The power may also be supplied, via the junction unit 64, to the ESS 40. The junction unit 64 is a component that serves as a communal meeting spot for electrical connections between the fuel cell stack 22, the ESS 40, and the electric motor 66.

It should be appreciated that the components of the fuel cell vehicle 10 are shown in FIG. 2 as an example, since components may be arranged in other ways, and additional or alternative components can be included in the fuel cell system 20, the cooling system 25, and other systems of the fuel cell vehicle 10. For example, more than one heat exchanger fan and/or more than one pump may be employed.

Regardless of the specific implementation of the fuel cell stack 22 and the cooling system 25, a temperature of the coolant circulating through the cooling system 25 can be decreased or increased in dependence on the control performed by the vehicle controller 30. As shown in FIG. 2, the vehicle controller 30 comprises processing circuitry 32 and memory 34 storing computer-executable instructions that, when executed by the processing circuitry 32, perform control of the fuel cell system 20 and the fuel cell vehicle 10 in accordance with examples of the present disclosure.

In some examples, the processing circuitry 32 may be configured to control the operation of the fuel cell vehicle 10 by providing a first instruction to the vehicle 10 to assume a hot operating mode in which a coolant inlet temperature of the coolant passing through the cooling system 25 passes comprises a hot coolant temperature, and providing a second instruction to the vehicle to assume a normal operating mode in which the coolant inlet temperature of the coolant passing through the cooling system 25 comprises a normal coolant temperature, wherein the hot coolant temperature is higher than the normal coolant temperature. The fuel cell vehicle 10 assumes or operates in the hot operating mode by setting a target coolant inlet temperature at the coolant inlet 27a of the fuel cell stack 22 to a target temperature comprising the hot coolant temperature. As used herein, the fuel cell vehicle 10 assumes or operates in the normal operating mode by setting the target coolant inlet temperature at the coolant inlet 27a of the fuel cell to the normal coolant temperature. The actual coolant inlet temperature, or the coolant inlet temperature, reaches the target coolant inlet temperature at the coolant inlet of the fuel cell stack.

In some examples, the normal coolant temperature may comprise 60 °C and the hot coolant temperature may comprise 80 °C. In some examples, the normal coolant temperature may comprise 60 °C and the hot coolant temperature may comprise 75 °C. In some examples, the normal coolant temperature may comprise 60 °C and the hot coolant temperature may comprise 70 °C. In some examples, the hot coolant temperature may be selected from a range of temperatures from 70 °C to 90 °C, inclusive of 70 °C and 90 °C. The normal coolant temperature may be selected from a range of temperatures from 60 °C to 70 °C, inclusive of 60 °C and 70 °C, and in any case lower than the hot coolant temperature. It should be appreciated that the above are non-limiting examples.

In some examples, the hot coolant temperature may be selected so that a required cathode air pressure is used to maintain a desired humidity of the fuel cell stack membrane.

The vehicle controller 30 may be configured to obtain information on a state of health (SoH) of the fuel cell stack 22. In implementations in which the fuel cell stack 22 comprises more than one fuel cell stack, the vehicle controller 30 may obtain information on the SoH of each of the fuel cell stacks.

The vehicle controller 30 may also be configured to obtain route data of a route for the fuel cell vehicle 10, the route data comprising at least one section of the route wherein switching from the hot operating mode to the normal operating mode can be performed while the fuel cell system can generate the required value of a traction power for the vehicle for the at least one section of the route. The at least one section of the route may be a part of the route where, while the fuel cell vehicle 10 has assumed the hot operating mode, the switch to the normal operating mode may be possible because that section of the route is less power demanding. Thus, even though the fuel cell vehicle would otherwise continue operating in the hot operating mode, the vehicle controller 30 is configured to determine whether a temporary switch to the normal operating mode may be possible. The vehicle controller 30 may generate or provide an instruction to the fuel cell vehicle 10, to either remain operating in the hot operating mode or to assume the normal operating mode, based on an expected degradation of the fuel cell stack due to switching between the hot operating mode and the normal operating mode, as discussed in more detail below.

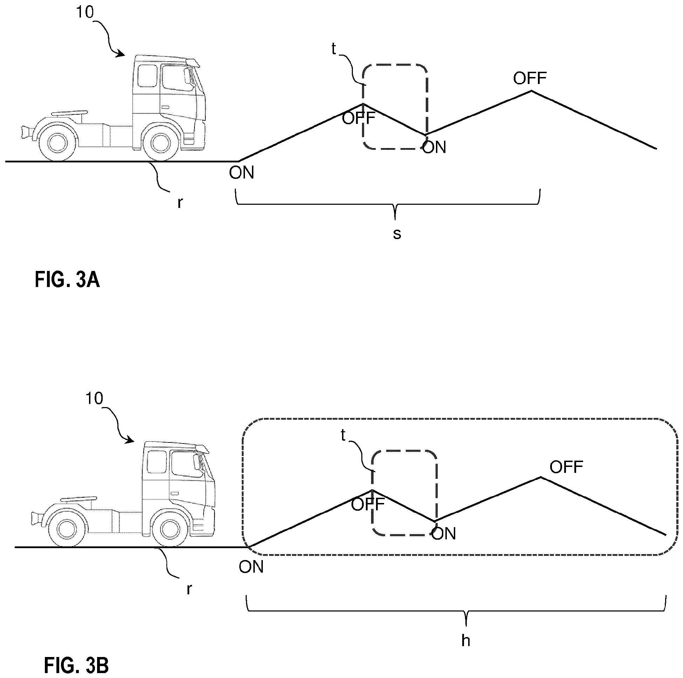

**FIGs. 3A** and **3B** are exemplary diagrams illustrating the fuel cell vehicle 10 traveling a route r and at least one section s of the route wherein switching from the hot operating mode to the normal operating mode can be performed while the fuel cell system can generate a required value of a traction power for the vehicle for the at least one section of the route. In other words, the at least one section s may be a part of the route where, even though the vehicle would otherwise be controlled to operate in the hot operating mode, the required traction power may still be provided by the fuel cell system even if the fuel cell vehicle assumes the normal operating mode for a certain portion t of the at least one section s of the route. The vehicle controller will then control the fuel cell vehicle to again assume the hot operating mode, as shown in FIG. 3A.

As shown in FIGs. 3A and 3B, the vehicle controller 30 may control the fuel cell vehicle 10 to enter or assume the hot operating mode and exit the hot operating mode and thereby assume the normal operating mode, as shown by symbols "ON" and "OFF", respectively.

The vehicle controller 30 may determine whether the SoH of the fuel cell stack is within a target SoH. When the SoH of the fuel cell stack is within the target SoH this may indicate that the SoH of the fuel cell stack, e.g. a current level of degradation of the fuel cell stack, enables entering the hot operating mode by the fuel cell system and the fuel cell vehicle. At the beginning of the section s, the vehicle controller 30 may provide an instruction to the fuel cell vehicle 10 to operate in the hot operating mode e.g. when more fuel cell system power is required than available at normal coolant temperature i.e. as used at the normal operating mode of the fuel cell vehicle 10. For example, the vehicle 10 may be controlled to assume the hot operating mode before or while climbing a steep hill.

The vehicle controller 30 may be configured to provide an instruction, referred to herein as a first instruction, to the vehicle 10 to assume the hot operating mode in which the coolant inlet temperature of the coolant passing through the cooling system comprises the hot coolant temperature; and to provide an instruction, referred to herein as a second instruction, to the vehicle to assume a normal operating mode in which the coolant inlet temperature comprises the normal coolant temperature, wherein the hot coolant temperature is higher than the normal coolant temperature. The vehicle controller 30 is also configured to, at sections of the route where the switch from the hot operating mode to the normal operating mode is possible, control the fuel cell vehicle to maintain the hot operating mode. In some examples, the vehicle controller 30 may provide an instruction, referred to herein as a third instruction, to the vehicle 10 to maintain the hot operating mode. The third instruction to the fuel cell vehicle 10, instructing the fuel cell vehicle 10 to maintain the hot operating mode, may be similar to the first instruction to the fuel cell vehicle 10 to enter or assume the hot operating mode. In some examples, however, no separate instruction may be provided to the fuel cell vehicle to maintain the hot operating mode, and the fuel cell vehicle continues operating in the hot operating mode without switching to or assuming the normal operating mode.

It should be appreciated that, as used herein, the first, second, and third instructions are referred as such not to indicate any particular order, but to differentiate between types of instructions or commands or control signals that the vehicle controller 30 may generate and provide to the fuel cell vehicle 10 and/or to the cooling system 25. The first, second, and third instructions may be provided to the cooling system such that the cooling system may adjust a target coolant inlet temperature of the coolant passing through the cooling system to thereby control whether the fuel cell vehicle and the fuel cell system operate at or assume the hot operating mode or the normal operating mode.

The vehicle controller 30 may identify sections of the route where the hot operating mode may be exited such that the vehicle 10 assumes the normal operating mode. Thus, as shown in FIG. 3A, as it travels the section s of the route r, the fuel cell vehicle 10 may potentially exit the hot operating mode at the portion t of the section s, wherein the portion t may be associated with a period of a lower power demand from the fuel cell system than in the rest of the section s. It should be noted that the section s of the route r may comprise more than one portion t of the lower power demand for which the vehicle controller of the fuel cell vehicle may assess whether switching to the normal operation mode would not result in degradation which exceeds potential degradation due to maintaining the hot operating mode rather than assuming the normal operating mode.

In examples herein, in response to determining that an expected degradation of the fuel cell stack 22 due to switching between the hot operating mode and the normal operating mode when passing the at least one section of the route is lower than an expected degradation of the fuel cell stack 22 due to the vehicle 10 remaining operating in the hot operating mode when passing the at least one section of the route, the vehicle controller 30 may provide the second instruction to the vehicle 10 to assume the normal operating mode during the at least one section of the route.

The portion t of the at least one section s may be e.g. a part of the route where less power may be required from the fuel cell system, such that it may be possible to exit the hot operating mode, even though the vehicle 10 may subsequently again assume the hot operating mode. The lower power at the portion t may be required from the fuel cell system for various reasons, e.g., due to a descending portion of the route within the section s, due to a reduced speed, and/or for other reasons.

In some examples, a portion or the entire route may be assessed beforehand and route data may be generated that comprises information on at least one section of the route wherein switching from the hot operating mode to the normal operating mode can be performed while the fuel cell system can generate the required value of a traction power for the fuel cell vehicle for the at least one section of the route. The at least one section of the route wherein switching from the hot operating mode to the normal operating mode may be possible may be determined in various way, e.g., based on one or more of a topography of the route e.g. inclining parts of the route, actual and predicted ambient temperature, a vehicle weight, legal speed limits, and other factors. The vehicle controller 30 may determine beforehand, such as before the fuel cell vehicle 10 travels the route, at which portions the hot operating mode is to be assumed by the vehicle 10 and at which sections within those portions switching from the hot operating mode to the normal operating mode can be performed while the fuel cell system can still generate the required value of the traction power for the vehicle. For example, a mission management system of the fuel cell vehicle 10, which may be part of the vehicle controller 30, may determine at which portions the hot operating mode will be required to be assumed by the vehicle 10.

In some examples, a look ahead system which may be part of the vehicle controller 30 may use a prediction horizon of a certain duration. For example, as shown in FIG. 3, a prediction horizon h on the route r, ahead of a current position of the vehicle 10 traveling the route r, may be assessed to identify at least one section of the route wherein switching from the hot operating mode to the normal operating mode can be performed in accordance with examples of the present disclosure. The prediction horizon may be defined in terms of time. In some examples, the prediction horizon may be defined in terms of distance. The vehicle controller 30 may estimate or predict, for the prediction horizon, a required value of a predicted traction power for the fuel cell vehicle 10, and predict the at least one section of the route wherein switching from the hot operating mode to the normal operating mode can be performed while the fuel cell system can generate the required value of the predicted traction power for the vehicle for the at least one section of the route.

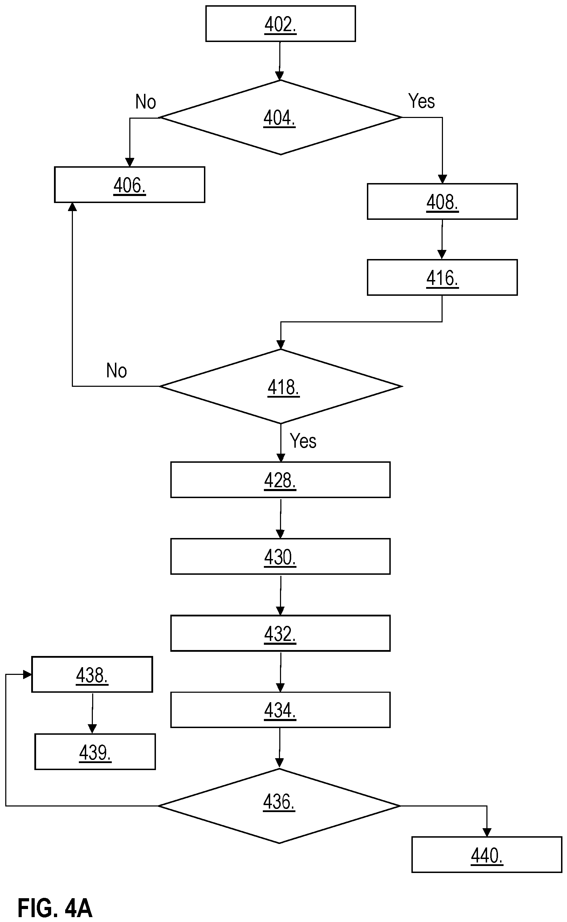

**FIG. 4A** is a flow chart illustrating a method 400 of controlling operation of a fuel cell vehicle comprising a fuel cell system comprising at least one fuel cell stack configured to generate traction power for the fuel cell vehicle, and a cooling system configured to pass a coolant through the fuel cell stack to dissipate heat generated by the fuel cell stack. The fuel cell vehicle may be e.g. fuel cell vehicle 10. The method may be performed by a suitable computer system or control system, e.g. the vehicle controller 30 such as by the processing circuitry 32 the vehicle controller 30.

At **block 402,** the vehicle controller determines a required value of a current or predicted traction power from the fuel cell system for the fuel cell vehicle. The fuel cell vehicle may be traveling a route. The route may be assigned to be fuel cell vehicle e.g. as part of a mission or an assignment. The vehicle controller may be aware of features of the route for the vehicle, such as a start or departure point, an end or destination point, and a path to be traveled by the vehicle from the start point to the end point. In some cases the fuel cell vehicle may be part of a fleet of vehicles.

The required value of the current or predicted traction power may depend on one or more of a current and/or predicted speed of the fuel cell vehicle, route, ambient conditions, vehicle characteristics, and other features.

In some examples, the required value of the current or predicted traction power that is required from the fuel cell system may not include a traction power that can be obtained from the ESS of the fuel cell vehicle. In other words, the required value of the traction power may indicate an amount of power that the fuel cell vehicle is requesting from the fuel cell system, after an amount of the traction power that the fuel cell vehicle can receive from the ESS has been determined by the vehicle controller. It should be noted that the required value of the traction power from the fuel cell system may be determined while taking a power capacity of the ESS into account. For instance, during a long, steep climb the power capacity of the ESS can be derated or decreased in order to not deplete the ESS before reaching a top of the climb. Thus, in order to fulfill fuel cell vehicle power requirements, the required value of the traction power from the fuel cell system may be increased.

At **block 404,** the vehicle controller may determine whether the required value of the current or predicted traction power is above a traction power threshold. This may be performed to select an operating mode for the fuel cell vehicle. It may be required to operate the fuel cell vehicle at the hot operating mode when the required value of the current or predicted traction power is above the traction power threshold. When the required value of the current or predicted traction power is at or below the traction power threshold, the vehicle controller may control the fuel cell vehicle to assume the normal operating mode.

Accordingly, at **block 406,** the vehicle controller may select the normal operating mode when the required value of the current or predicted traction power is at or below the traction power threshold. Selecting the normal operating mode may comprise providing a second instruction to the fuel cell vehicle to assume the normal operating mode.

At **block 408,** the vehicle controller may select the hot operating mode for the fuel cell vehicle when the required value of the current or predicted traction power is above the traction power threshold. The hot operating mode may be selected when the traction power required from the fuel cell system is such that operating the fuel cell vehicle at normal coolant temperatures may not be sufficient to generate the required traction power. Thus, it may be needed to increase the temperature of the coolant passing through the fuel cell stack, whereby the fuel cell vehicle and the fuel cell system may be said to assume the hot operating mode.

In some examples, selecting the hot operating mode further optionally comprises selecting among a fuel saving operating mode of the fuel cell vehicle and an increased power operating mode of the fuel cell vehicle, wherein the fuel saving operating mode and the increased power operating mode are respective types of the hot operating mode. In the fuel saving operating mode, the vehicle controller may control the fuel cell system so that fuel consumption by the fuel cell system and thus by the fuel cell vehicle is reduced even though a speed of the vehicle may be reduced because of the reduced fuel consumption. In the increased power operating mode, the vehicle controller may control the fuel cell system to generate the required value of the traction power for the vehicle, without any specific consideration of the fuel consumption by the fuel cell system.

At **block 416,** the vehicle controller may obtain an SoH of the fuel cell stack. The SoH of the fuel cell stack may be defined as or based on one or more of a voltage level of the fuel cell stack at a certain current, a difference between the voltage level of the fuel cell stack at the certain current and a reference voltage at the certain current, a number of operating hours of the fuel cell stack, and a number of start/stop events for the fuel cell stack i.e. that the fuel cell stack has experienced. In some examples, the SoH of the fuel cell stack may be defined based on one or more of the difference between the voltage level of the fuel cell stack at the certain current and the reference voltage at the certain current, the number of operating hours of the fuel cell stack, and the number of start/stop events for the fuel cell stack. In some examples, the SoH of the fuel cell stack may be defined based on the difference between the voltage level of the fuel cell stack at the certain current and the reference voltage at the certain current and the number of operating hours of the fuel cell stack.

The voltage level can be defined as a measured level of voltage at the output of the fuel cell stack. In some examples, to assess an SoH of the fuel cell stack, at every power level of that fuel cell stack, it is possible to check the voltage and current output from the fuel cell stack against a known or reference voltage and current values corresponding to that power level.

For the fuel cell stack, an output voltage for given current output, which can also be referred to as a current density, may be known. As the fuel cell stack ages, the known relationship between the output voltage and the current output changes such that a difference may be observed between the voltage level of the fuel cell stack at the certain current and a reference voltage at the same certain current. For example, when the measured voltage level of the fuel cell stack at the certain current is below the reference voltage at the same certain current, the vehicle controller may determine that the SoH of the fuel cell stack has decreased.

The number of operating hours of the fuel cell stack can be defined as a number that the fuel cell stack has been operated i.e. has been active or activated, not including periods of inactivity of the fuel cell stack. The number of start/stop events for the fuel cell stack can be defined as a number of times that fuel cell stack has been activated or started and deactivated or stopped. Other parameters may be used to determine a SoH of the fuel cell stack. One or more of the parameters may be used, alone or in combination, to determine the SoH of the fuel cell stack.

The SoH of the fuel cell stack may be monitored and updated, as the fuel cell stack ages, throughout a lifetime of the fuel cell stack. In some examples, the mission management system of the fuel cell vehicle may store information on the SoH of each fuel cell stack of the fuel cell system. The vehicle controller may receive or obtain this information from the mission management system, which may be part of the vehicle controller e.g. a vehicle controller.

In some examples, the fuel cell system may comprise more than one fuel cell stack, and the SoH of the at least one fuel cell stack may be determined based on a lowest SoH among the corresponding SoHs of the fuel cell stacks. In some examples, the SoH of the at least one fuel cell stack may be determined based on an average SoH of the fuel cell stacks, or as another type of combination of SoHs of the individual stacks. In some examples, the SoH of each of the fuel cell stacks may be assessed separately.

At decision **block 418,** the vehicle controller may determine whether the SoH of the fuel cell stack is within a target SoH. The target SoH may be defined as a target SoH value or a range of values that define one or more acceptable values of SoH for the fuel cell stack to operate in the hot operating mode.

In some examples, the target SoH may be defined as a value or a range of values indicating an expected degradation of the fuel cell stack over time. The expected degradation of the fuel cell stack may be expressed in e.g. microvolts per a unit of operating time of the fuel cell stack. The expected degradation of the fuel cell stack may be determined based on various parameters that are used to determine the SoH of the fuel cell stack, as described e.g. in connection with block 416, above. For example, a number of the start/stop events may affect the degradation of the fuel cell stack. Thus, given an operating time or a number of operating hours of the fuel cell stack, a current, actual SoH of the fuel cell stack, e.g., represented as a voltage level of the fuel cell stack, may be compared to an expected voltage level for this fuel cell stack that is expected given the operating time of the stack.

As shown in FIG. 4A, responsive to determining that the SoH of the fuel cell stack is not within the target SoH, the process 400 may follow to block 406 where the vehicle controller may instruct and/or control the fuel cell vehicle to assume the normal operating mode. This may comprise providing a second instruction to the fuel cell vehicle to assume the normal operating mode. When the SoH of the fuel cell stack is not within the target SoH, this may be indicative of a level of degradation of the fuel cell stack at which it may not be desirable for the fuel cell stack to operate in the hot operating mode.

At **block 428,** when it is determined that the SoH of the fuel cell stack is within the target SoH, the vehicle controller may obtain route data of a route for the fuel cell vehicle, the route data comprising at least one section of the route wherein switching from a hot operating mode to a normal operating mode can be performed while the fuel cell system can generate the required value of a traction power for the vehicle for the at least one section of the route. In examples herein, in the hot operating mode the coolant inlet temperature of the coolant passing through the cooling system comprises the hot coolant temperature, and in the normal operating mode the coolant inlet temperature comprises the normal coolant temperature, wherein the hot coolant temperature is higher than the normal coolant temperature. In the hot operating mode the target coolant inlet temperature of the coolant passing through the cooling system is set to the hot coolant temperature, and in the normal operating mode the target coolant inlet temperature is set to the normal coolant temperature.

The route data comprises data on the route that the fuel cell vehicle travels or that the fuel cell vehicle is expected to travel. In any case, the vehicle controller may be aware of properties of the route ahead of the vehicle's current position. The route data may comprise topography of the route including ascending and descending portions, altitude and other information. The route data may comprise information on portions of the route where the fuel cell vehicle may assume the hot operating mode. These portions may be determined based on the route data and data on the speed of the vehicle at which the vehicle is traveling or expected to travel the portions, actual and predicted ambient conditions, and characteristics of the vehicle, e.g. a gross weight of the vehicle, a weight of a load or cargo carried by the vehicle, etc. The portions of the route at which the fuel cell vehicle may assume the hot operating mode are determined based on the required value of the current or predicted traction power for the fuel cell vehicle at these portions.

In examples in accordance with the present disclosure, the route data comprises data on at least one section of the route wherein switching from the hot operating mode to the normal operating mode can be performed while the fuel cell system can generate the required value of the current or predicted traction power for the vehicle for the at least one section of the route. The at least one section of the route may be identified within a portion of the route where the fuel cell vehicle may assume the hot operating mode. The at least one section of the route may be a part of the route for which the vehicle controller may determine that, while the fuel cell vehicle is operating in the hot operating mode, the fuel cell vehicle may be controlled to assume the normal operating mode thereby alleviating certain potentially damaging effects on the fuel cell stack of operation in the hot operating mode.

In some examples, the at least one section of the route may comprise multiple sections of the route wherein switching from the hot operating mode to the normal operating mode can be performed in accordance with examples of the present disclosure. For each of these sections, a possibility of switching from the hot operating mode to the normal operating mode, during a stretch of the route where otherwise the hot operating mode would be continuously assumed, may be assessed in accordance with examples of the present disclosure.

At **block 430,** the vehicle controller may determine a time duration for the at least one section of the route wherein switching from the hot operating mode to the normal operating mode can be performed. The at least one section of the route may be defined from a point in time at which the vehicle controller may provide a first instruction to the fuel cell vehicle to assume the hot operating mode until a point in time at which the vehicle controller may provide another first instruction to the fuel cell vehicle to assume the hot operating mode, after the vehicle controller has provided a second instruction to the fuel cell vehicle to assume the normal operating mode during the at least one section of the route. For example, with reference to FIG. 3A, the time duration for the at least one section s of the route r may be determined.

At **block 432,** the vehicle controller may determine an expected degradation x3 of the fuel cell stack due to the fuel cell vehicle remaining operating in the hot operating mode when passing the at least one section of the route. The expected degradation x3 may be expressed in volts per second (V/s).

At **block 434,** the vehicle controller may determine an expected degradation of the fuel cell stack due to the fuel cell vehicle switching between the hot operating mode and the normal operating mode. The expected degradation of the fuel cell stack due to the switching between the hot operating mode and the normal operating mode may comprise an expected degradation x1 of the fuel cell stack due to switching from the hot operating mode to the normal operating mode and an expected degradation x2 of the fuel cell stack due to switching from the normal operating mode to the hot operating mode. The expected degradation x1 and x2 may be expressed in volts per second (V/s). Thus, a reduction in voltage of the fuel cell stack per second of the vehicle operating in the hot operating mode may be assessed.

At **block 436,** the vehicle controller determine whether the expected degradation of the fuel cell stack due to switching between the hot operating mode and the normal operating mode when passing the at least one section of the route is lower than the expected degradation of the fuel cell stack due to the vehicle remaining operating in the hot operating mode when passing the at least one section of the route. Thus, it may be determined whether a sum of the degradations x1 and x2 is lower than the degradation x3. This allows to determine whether it is expected that the fuel cell stack would degrade more if the fuel cell vehicle assumes the normal operation mode at the at least one section of the route, such as at the at least one lower power demand portion, wherein switching from the hot operating mode to the normal operating mode can be performed, or if the fuel cell vehicle maintains operating in the hot operating mode and does not enter the normal operating mode.

At **block 438,** as shown in FIG. 4A, when it is determined that the SoH of the fuel cell stack is within the target SoH and the fuel cell vehicle assumes the hot operating mode, in response to determining that an expected degradation of the fuel cell stack due to switching between the hot operating mode and the normal operating mode when passing the at least one section of the route is lower than an expected degradation of the fuel cell stack due to the vehicle remaining operating in the hot operating mode when passing the at least one section of the route, the vehicle controller provides the second instruction to the vehicle to assume the normal operating mode during the at least one section of the route.

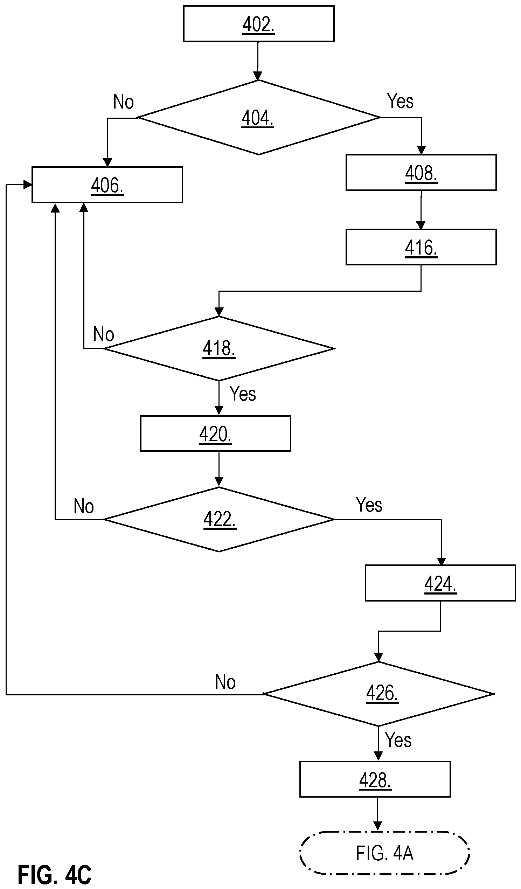

The processing at block 438 may be similar to the processing at block 406 but it is shown separately to indicate that the vehicle controller provides the second instruction to the vehicle to assume the normal operating mode during the at least one section of the route based on the comparison of the expected degradation at block 436, in accordance with examples of the present disclosure. At block 406, the vehicle controller may instruct and/or control the fuel cell vehicle to assume or operate in the normal operating mode for other reasons, based on determining at one or more of the blocks 418, 422, 426, with reference to FIG. 4A and also FIG. 4C that is discussed below.

The vehicle controller may control the fuel cell vehicle to switch from the hot operating mode to the normal operating mode at a portion of the at least one section of the route that is referred to a lower power demand portion, meaning that a decreased amount of power may be required from the fuel cell system at that portion of the at least one section, while the fuel cell vehicle such as the electric motor and in some cases one or more auxiliary devices, would receive the required value of the traction power. At the same time, without the processing in accordance with examples of the present disclosure, the fuel cell vehicle would otherwise continue operating in the hot operating mode when passing through this portion of the route. With reference to FIG. 3A, the lower power demand portion comprises the portion t within the at least one section s wherein switching from the hot operating mode to the normal operating mode can be performed for the duration of time the vehicle travels the portion t.

Thus, the vehicle controller may be configured to, in response to determining that the expected degradation of the fuel cell stack due to switching from the hot operating mode to the normal operating mode when entering the at least one lower power demand portion of the at least one section of the route and switching from the normal operating mode to the hot operating mode when exiting the at least one lower power demand portion of the at least one section of the route is greater than or equal to the expected degradation of the fuel cell stack due to the vehicle remaining operating in the hot operating mode when passing the at least one section of the route, provide the second instruction to the fuel cell vehicle to assume the normal operating mode during the at least one section of the route. In some examples, the second instruction may be provided to the fuel cell vehicle before the vehicle passes through the at least one section and in some cases as the vehicle is passing through the at least one section but before the vehicle has entered the at least one lower power demand portion of the at least one section of the route.

In the normal operating mode, the coolant inlet temperature of the coolant passing through the cooling system comprises the normal coolant temperature. In the hot operating mode, the coolant inlet temperature of the coolant passing through the cooling system comprises the hot coolant temperature, wherein the hot coolant temperature is higher than the normal coolant temperature.

At **block 439,** the vehicle controller may provide the first instruction to the fuel cell vehicle to assume the hot operating mode when exiting the at least one lower power demand portion of the at least one section of the route. For example, with reference to FIG. 3A, the vehicle controller may provide the first instruction to the fuel cell vehicle to assume the hot operating mode when exiting the at least one lower power demand portion t of the at least one section s of the route r.

At **block 440,** when it is determined that the SoH of the fuel cell stack is within the target SoH and the fuel cell vehicle assumes the hot operating mode, in response to determining that the expected degradation of the fuel cell stack due to switching between the hot operating mode and the normal operating mode when passing the at least one section of the route is greater than or equal to the expected degradation of the fuel cell stack due to the vehicle remaining operating in the hot operating mode when passing the at least one section of the route, the vehicle controller may control the fuel cell vehicle to maintain the hot operating mode during the at least one section of the route. In some examples, the vehicle controller may control the fuel cell vehicle to maintain the hot operating mode during the at least one section of the route by providing a third instruction to the fuel cell vehicle to maintain the hot operating mode during the at least one section of the route. In some examples, the third instruction may be similar to or may be the first instruction that the processing circuitry of the vehicle controller is configured to provide to the fuel cell vehicle for the fuel cell vehicle to assume the hot operating mode in which the target coolant inlet temperature of the coolant passing through the cooling system is set to the hot coolant temperature. The fuel cell vehicle is considered to have assumed the hot operating mode once the actual coolant inlet temperature has reached the target coolant inlet temperature comprising the hot coolant temperature.

Maintaining the hot operating mode may involve continuing to control the target coolant inlet temperature to be set to the hot coolant temperature, whereby the actual coolant inlet temperature is maintained at the target coolant inlet temperature.

In some examples, when a target coolant inlet temperature increases, there is an increased possibility of drying out the membrane of the fuel cell stack. To avoid that, i.e., to be able to raise the target coolant inlet temperature above a certain level, an air pressure in the cathode of the fuel cell stack may be increased. This prevents the membrane from drying. That is possible with the active control of e.g. an electric turbocharger (ETC), in order to increase the air pressure in the cathode side.

The process 400 may be repeated as the fuel cell vehicle 10 travels the route and different values of the current or predicted traction power are requested from the fuel cell system by the fuel cell vehicle. Accordingly, although not shown in FIG. 4A, the process 400 may return to block 402 where the vehicle controller determines the required value of a current or predicted traction power from the fuel cell system for the fuel cell vehicle.

As the fuel cell vehicle 10 is traveling the route, the vehicle controller 30 may control the vehicle 10 to alternate between the hot operating mode comprising the increased power operating mode, the hot operating mode comprising the fuel saving operating mode, and the normal operating mode, in various orders.

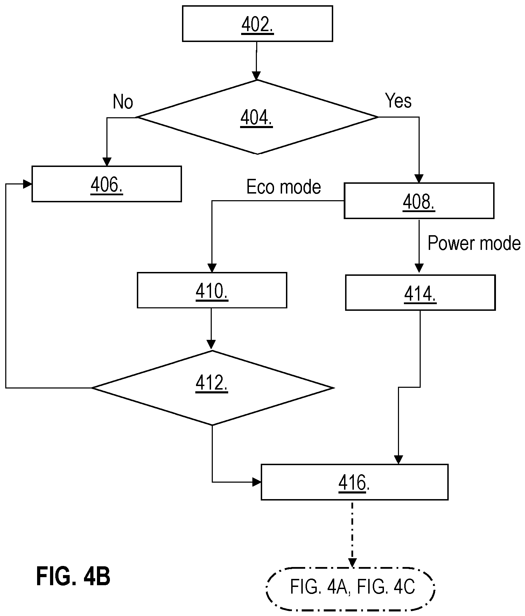

**FIG. 4B** illustrates that the method or process 400 may optionally comprise selecting a type of the hot operating mode. Processing at some of the blocks in FIG. 4B is similar to the processing at corresponding blocks of FIG. 4A labeled with the same numbers. The processing at the blocks already described in connection with FIG. 4A is not repeated in detail herein.

At **block 402,** the vehicle controller determines a required value of a current or predicted traction power from the fuel cell system for the fuel cell vehicle.

At **block 404,** the vehicle controller may determine whether the required value of the current or predicted traction power is above a traction power threshold.

At **block 406,** the vehicle controller may select the normal operating mode when the required value of the current or predicted traction power is at or below the traction power threshold. Selecting the normal operating mode may comprise providing a second instruction to the fuel cell vehicle to assume the normal operating mode.

At **block 408,** the vehicle controller may select the hot operating mode for the fuel cell vehicle when the required value of the current or predicted traction power is above the traction power threshold, such that it may not be possible for the fuel cell system to deliver the required value of the current or predicted traction power in the normal operating mode.

In some examples, selecting the hot operating mode may further comprise selecting among the fuel saving operating mode of the vehicle and the increased power operating mode of the vehicle, wherein the fuel saving operating mode and the increased power operating mode are respective types of the hot operating mode. The selection between the fuel saving operating mode, also referred to as an eco operating mode, and the increased power operating mode, also referred to as a power mode, may be made based on the required value of the current or predicted traction power for the fuel cell vehicle. The required value of the traction power may indicate how much traction power the fuel cell vehicle 10 requests from the fuel cell system. The hot operating mode comprising the increased power operating mode may be selected when the vehicle controller 30 determines that a maximum power that the fuel cell system may generate or deliver is required to meet the required value of the current or predicted traction power. The hot operating mode comprising the fuel saving operating mode may be selected when the vehicle controller 30 determines that the maximum power that the fuel cell system may generate or deliver is not required to meet the required value of the current or predicted traction power, and when it is desirable to decrease fuel consumption.

In some examples, the selection between the increased power operating mode and the fuel saving operating mode may be performed based on a user input, e.g, input received from a driver of the fuel cell vehicle 10. The input may be received via a control panel or console of the vehicle 10, via a computing device operated by the driver of the vehicle 10, or in another manner. As discussed below, a further assessment may be performed to determine in which type of the hot operating modes to control the vehicle to operate. The driver's input, if received, may be overridden in some cases.

The vehicle controller may estimate a duration of time for the fuel cell vehicle to operate in the fuel saving operating mode or in the increased power operating mode.

At **block 410,** when the fuel saving operating mode is selected, the vehicle controller may determine or estimate an estimated benefit for fuel consumption by the fuel cell stack for an estimated duration of time for the fuel cell vehicle to operate in the fuel saving operating mode. The estimated benefit, such as decrease in the fuel consumption by the fuel cell stack for the estimated duration of the fuel saving operating mode, may be expressed e.g., in kilograms of fuel per 100 km, or in another format.

At **block 412,** the vehicle controller may compare the estimated benefit for fuel consumption by the fuel cell stack for the estimated duration of time for the fuel cell vehicle to operate in the fuel saving operating mode and a minimum fuel consumption decrease. Thus, the gain of operating the fuel cell vehicle in the hot operating mode is compared to a threshold gain such as the minimum fuel consumption decrease that may be achieved if the vehicle is to operate in the fuel saving operating mode. The minimum fuel consumption decrease may also be referred to as a minimum fuel consumption improvement and it may be defined e.g., as x kilograms of fuel per 100 km, or in another format. The estimated benefit for fuel consumption by the fuel cell stack for the estimated duration of time for the fuel cell vehicle to operate in the fuel saving operating mode and the minimum fuel consumption decrease may be represented in similar units so that these values may be compared to determine whether it is justifiable for the fuel cell vehicle to operate in the fuel saving operating mode.

At **block 414,** when the increased power operating mode is selected, the vehicle controller may estimate a duration of time for the fuel cell vehicle to operate in the increased power operating mode.

As shown in FIG. 4B, regardless of whether the fuel saving operating mode or the increased power operating mode is selected, the process 400 may follow to block 416 wherein an SoH of the fuel cell stack may be obtained. The processing may then proceed as shown in connection with FIG. 4A and/or in connection with FIG. 4C discussed below.

**FIG. 4C** illustrates processing that may be performed as part of the method or process 400. Processing at some of the blocks in FIG. 4C is similar to the processing at corresponding blocks of FIG. 4A labeled with the same numbers. The processing at the blocks already described in connection with FIG. 4A is not repeated in detail in connection with FIG. 4C.

At **block 402,** the vehicle controller determines a required value of a current or predicted traction power from the fuel cell system for the fuel cell vehicle.

At **block 404,** the vehicle controller may determine whether the required value of the current or predicted traction power is above a traction power threshold.

At **block 406,** the vehicle controller may select the normal operating mode when the required value of the current or predicted traction power is at or below the traction power threshold. Selecting the normal operating mode may comprise providing a second instruction to the fuel cell vehicle to assume the normal operating mode.

At **block 408,** the vehicle controller may select the hot operating mode for the fuel cell vehicle when the required value of the current or predicted traction power is above the traction power threshold, such that it may not be possible for the fuel cell system to deliver the required value of the current or predicted traction power in the normal operating mode.

It should be noted that the processing as described in above for blocks 410, 412, and 414 of FIG. 4B may also be performed as part of the method 400 shown in FIG. 4C.

At **block 416,** the vehicle controller may obtain an SoH of the fuel cell stack.

At decision **block 418,** the vehicle controller may determine whether the SoH of the fuel cell stack is within a target SoH. The target SoH may be defined as a target SoH value or a range of values that define one or more acceptable values of SoH for the fuel cell stack to operate in the hot operating mode.

As shown in FIG. 4C, responsive to determining that the SoH of the fuel cell stack is not within the target SoH, the process 400 may follow to block 406 where the vehicle controller may instruct and/or control the fuel cell vehicle to assume the normal operating mode.

At **block 420,** when it is determined that the SoH of the fuel cell stack is within the target SoH, the vehicle controller may determine an accumulated total time that the fuel cell vehicle has assumed the hot operating mode. In other words, the accumulated total time the fuel cell vehicle has operated in the hot operating mode may be determined. Each time the fuel cell vehicle operates in the hot operating mode, this may be recorded by the vehicle controller and/or in a storage device accessible to the vehicle controller. Accordingly, at any given time, it may be known for how long the fuel cell vehicle has assumed the hot operating mode.

At decision **block 422,** the vehicle controller may determine whether the accumulated total time the vehicle has assumed the hot operating mode is below an accumulated time threshold. The operation in the hot operating mode causes certain degradation to the fuel cell stack and the vehicle controller may determine whether further operating of the fuel cell vehicle in the hot operating mode is justifiable such that no excessive degradation of the fuel cell stack will occur. The accumulated time threshold may be defined as a total duration of time the fuel cell vehicle has spent operating in the hot operating mode, based on lengths of period of times the fuel cell vehicle has operated in the hot operating mode.

As shown in **FIG. 4C****,** responsive to determining that the accumulated total time the vehicle has assumed the hot operating mode is not below, i.e. at or above, the accumulated time threshold, the vehicle controller may return to block 406 where the vehicle controller provides the second instruction to the vehicle to assume the normal operating mode.

At **block 424,** responsive to determining that the accumulated total time the vehicle has assumed the hot operating mode is below the accumulated time threshold, the vehicle controller may estimate a percentage of a duration of time the fuel cell stack has operated in the hot operating mode, when the fuel cell vehicle has assumed the hot operating mode, over a total lifetime of the fuel cell stack.

At decision **block 426,** the vehicle controller may determine whether the estimated percentage of the duration of time the fuel cell vehicle has operated in the hot operating mode over the total lifetime of the fuel cell vehicle is below a hot mode ratio threshold for the fuel cell vehicle. The estimated percentage of the duration of time the fuel cell vehicle has operated in the hot operating mode may be determined e.g. based on historical data on operation of the vehicle acquired as the vehicle was traveling one or more routes.

The hot mode ratio threshold may be defined as a proportion of its total operating time the fuel cell vehicle is allowed, from the perspective of a possible risk of degradation to the fuel cell system, to operate in the hot operating mode.

As shown in **FIG. 4C****,** responsive to determining at block 426 ("No") that the estimated percentage of the duration of time the fuel cell vehicle has operated in the hot operating mode over the total lifetime of the fuel cell vehicle is not below, i.e. at or above, the hot mode ratio threshold for the fuel cell vehicle, the vehicle controller may return to block 406 where the vehicle controller provides the second instruction to the vehicle to assume the normal operating mode.

As also shown in **FIG. 4C****,** at **block 428,** responsive to determining at block 426 ("Yes") that the estimated percentage of the duration of time the fuel cell vehicle has operated in the hot operating mode over the total lifetime of the fuel cell vehicle is below the hot mode ratio threshold for the fuel cell vehicle, the vehicle controller may obtain the route data of the route for the fuel cell vehicle, the route data comprising at least one section of the route wherein switching from a hot operating mode to a normal operating mode can be performed while the fuel cell system can generate the required value of a traction power for the vehicle for the at least one section of the route.

The route data may be obtained as discussed in connection with FIG. 4A. After block 428, the process 400 may proceed as in FIG. 4A.

To perform the method steps described herein, the vehicle controller 30 may be configured to perform the processing described in connection with FIGs. 4A, 4B, 4C and/or any other examples in accordance with the present disclosure.

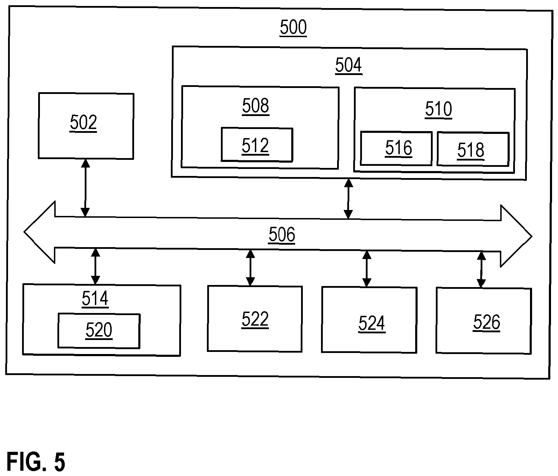

**FIG. 5** is a schematic diagram of a computer system **500** for implementing examples disclosed herein. The vehicle controller 30 may be implemented as the computer system **500.** The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples which may respectively be combined with any of the other examples herein.

### EXAMPLES

Example 1. A fuel cell vehicle, comprising:
a fuel cell system comprising at least one fuel cell stack configured to generate traction power for the fuel cell vehicle;
a cooling system configured to pass a coolant through the fuel cell stack to dissipate heat generated by the fuel cell stack; and
a vehicle controller comprising processing circuitry that is configured to:
   determine a required value of a current or predicted traction power from the fuel cell system for the fuel cell vehicle;
   obtain a state of health, SoH, of the fuel cell stack;
   provide a first instruction to the fuel cell vehicle to assume a hot operating mode in which a coolant inlet temperature of the coolant passing through the cooling system comprises a hot coolant temperature;
   provide a second instruction to the fuel cell vehicle to assume a normal operating mode in which the coolant inlet temperature of the coolant passing through the cooling system comprises a normal coolant temperature, wherein the hot coolant temperature is higher than the normal coolant temperature,
   obtain route data of a route for the fuel cell vehicle, the route data comprising at least one section of the route wherein switching from the hot operating mode to the normal operating mode can be performed while the fuel cell system can generate the required value of a traction power for the fuel cell vehicle for the at least one section of the route; and
   when it is determined that the SoH of the fuel cell stack is within a target SoH and the fuel cell vehicle assumes the hot operating mode, the processing circuitry being configured to:
      - in response to determining that an expected degradation of the fuel cell stack due to switching between the hot operating mode and the normal operating mode when passing the at least one section of the route is lower than an expected degradation of the fuel cell stack due to the fuel cell vehicle remaining operating in the hot operating mode when passing the at least one section of the route, provide the second instruction to the fuel cell vehicle to assume the normal operating mode during the at least one section of the route.

Example 2. The fuel cell vehicle of Example 1, wherein the processing circuitry is further configured to:
- in response to determining that the expected degradation of the fuel cell stack due to switching between the hot operating mode and the normal operating mode when passing the at least one section of the route is greater than or equal to the expected degradation of the fuel cell stack due to the fuel cell vehicle remaining operating in the hot operating mode when passing the at least one section of the route, control the fuel cell vehicle to maintain the hot operating mode during the at least one section of the route.

Example 3. The fuel cell vehicle of Example 1 or Example 2, wherein the processing circuitry is further configured to:
- in response to determining that the expected degradation of the fuel cell stack due to switching from the hot operating mode to the normal operating mode when entering at least one lower power demand portion of the at least one section of the route and switching from the normal operating mode to the hot operating mode when exiting the at least one lower power demand portion of the at least one section of the route is lower than the expected degradation of the fuel cell stack due to the fuel cell vehicle remaining operating in the hot operating mode when passing the at least one section of the route, provide the second instruction to the fuel cell vehicle to assume the normal operating mode during the at least one section of the route.

Example 4. The fuel cell vehicle of Example 3, wherein the processing circuitry is further configured to:
- in response to determining that the expected degradation of the fuel cell stack due to switching from the hot operating mode to the normal operating mode when entering the at least one lower power demand portion of the at least one section of the route and switching from the normal operating mode to the hot operating mode when exiting the at least one lower power demand portion of the at least one section of the route is greater than or equal to the expected degradation of the fuel cell stack due to the fuel cell vehicle remaining operating in the hot operating mode when passing the at least one section of the route, control the fuel cell vehicle to maintain the hot operating mode during the at least one section of the route.

Example 5. The fuel cell vehicle of any one of Examples 3 to 4, wherein the processing circuitry is further configured to:
provide the first instruction to the fuel cell vehicle to assume the hot operating mode when exiting the at least one lower power demand portion of the at least one section of the route.

Example 6. A method of controlling operation of a fuel cell vehicle comprising a fuel cell system comprising at least one fuel cell stack configured to generate traction power for the fuel cell vehicle and a cooling system configured to pass a coolant through the fuel cell stack to dissipate heat generated by the fuel cell stack, the method comprising:
determining a required value of a current or predicted traction power for the fuel cell vehicle;
obtaining a state of health, SoH, of the fuel cell stack;
obtaining route data of a route for the fuel cell vehicle, the route data comprising at least one section of the route wherein switching from a hot operating mode to a normal operating mode can be performed while the fuel cell system can generate the required value of a traction power for the fuel cell vehicle for the at least one section of the route, wherein in the hot operating mode a coolant inlet temperature of the coolant passing through the cooling system comprises a hot coolant temperature and in the normal operating mode the coolant inlet temperature comprises a normal coolant temperature, and wherein the hot coolant temperature is higher than the normal coolant temperature; and
when it is determined that the SoH of the fuel cell stack is within a target SoH and the fuel cell vehicle assumes the hot operating mode,
   - in response to determining that an expected degradation of the fuel cell stack due to switching between the hot operating mode and the normal operating mode when passing the at least one section of the route is lower than an expected degradation of the fuel cell stack due to the fuel cell vehicle remaining operating in the hot operating mode when passing the at least one section of the route, providing a second instruction to the fuel cell vehicle to assume the normal operating mode during the at least one section of the route.

Example 7. The method of Example 6, further comprising:
- in response to determining that the expected degradation of the fuel cell stack due to switching between the hot operating mode and the normal operating mode when passing the at least one section of the route is greater than or equal to the expected degradation of the fuel cell stack due to the fuel cell vehicle remaining operating in the hot operating mode when passing the at least one section of the route, controlling the fuel cell vehicle to maintain the hot operating mode during the at least one section of the route.

Example 8. The method of Example 6 or Example 7, further comprising:
- in response to determining that the expected degradation of the fuel cell stack due to switching from the hot operating mode to the normal operating mode when entering at least one lower power demand portion of the at least one section of the route and switching from the normal operating mode to the hot operating mode when exiting the at least one lower power demand portion of the at least one section of the route is lower than the expected degradation of the fuel cell stack due to the fuel cell vehicle remaining operating in the hot operating mode when passing the at least one section of the route, providing the second instruction to the fuel cell vehicle to assume the normal operating mode during the at least one section of the route.

Example 9. The method of Example 8, further comprising:
- in response to determining that the expected degradation of the fuel cell stack due to switching from the hot operating mode to the normal operating mode when entering the at least one lower power demand portion of the at least one section of the route and switching from the normal operating mode to the hot operating mode when exiting the at least one lower power demand portion of the at least one section of the route is greater than or equal to the expected degradation of the fuel cell stack due to the fuel cell vehicle remaining operating in the hot operating mode when passing the at least one section of the route, controlling the fuel cell vehicle to maintain the hot operating mode during the at least one section of the route.

Example 10. The method of any one of Examples 8 to 9, further comprising:
- providing the first instruction to the fuel cell vehicle to assume the hot operating mode when exiting the at least one lower power demand portion of the at least one section of the route.

Example 11. The method of any one of Examples 6 to 10, further comprising:
when it is determined that the SoH of the fuel cell stack is within the target SoH and prior to obtaining the route data of the route for the fuel cell vehicle,
   - determining whether an accumulated total time the fuel cell vehicle has assumed the hot operating mode is below an accumulated time threshold; and
   - responsive to determining that the accumulated total time the fuel cell vehicle has assumed the hot operating mode is below the accumulated time threshold, estimating a percentage of a duration of time the fuel cell vehicle has assumed the hot operating mode over a total lifetime of the fuel cell vehicle,
wherein the route data is obtained responsive to determining that the estimated percentage of the duration of time the fuel cell vehicle has operated in the hot operating mode over the total lifetime of the fuel cell vehicle is below a hot mode ratio threshold for the fuel cell vehicle.

Example 12. The method of any one of Examples 6 to 11, further comprising:
prior to obtaining the SoH of the fuel cell stack and the route data, selecting the hot operating mode for the fuel cell vehicle when the required value of the traction power is above a traction power threshold, wherein selecting the hot operating mode further comprises selecting among a fuel saving operating mode of the fuel cell vehicle and an increased power operating mode of the fuel cell vehicle, wherein the fuel saving operating mode and the increased power operating mode are respective types of the hot operating mode.

Example 13. The method of Example 12, comprising, when the fuel saving operating mode is selected,
comparing an estimated benefit for fuel consumption by the fuel cell stack for an estimated duration of time for the fuel cell vehicle to operate in the fuel saving operating mode and a minimum fuel consumption decrease; and
controlling the fuel cell vehicle to operate in the hot operating mode comprising the fuel saving operating mode when the estimated benefit for fuel consumption by the fuel cell stack is greater than the minimum fuel consumption decrease.

Example 14. A vehicle controller comprising processing circuitry that is configured to perform a method in accordance with any one of Examples 6 to 13.

Example 15. A computer program product comprising computer-executable instructions, which, when executed by processing circuitry, cause the processing circuitry to perform the method of any one of Examples 6 to 13.

Example 16. A tangible non-transitory computer-readable storage medium, having stored thereon a computer program product comprising computer-executable instructions which, when executed by processing circuitry, cause the processing circuitry to perform the method of any one of Examples 6 to 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell vehicle (10), comprising:
a fuel cell system (20) comprising at least one fuel cell stack (22) configured to generate traction power for the fuel cell vehicle (10);
a cooling system (25) configured to pass a coolant through the fuel cell stack to dissipate heat generated by the fuel cell stack; and
a vehicle controller (30) comprising processing circuitry (32) that is configured to:
determine a required value of a current or predicted traction power from the fuel cell system for the fuel cell vehicle;
obtain a state of health, SoH, of the fuel cell stack;
provide a first instruction to the fuel cell vehicle to assume a hot operating mode in which a coolant inlet temperature of the coolant passing through the cooling system comprises a hot coolant temperature;
provide a second instruction to the fuel cell vehicle to assume a normal operating mode in which the coolant inlet temperature of the coolant passing through the cooling system comprises a normal coolant temperature, wherein the hot coolant temperature is higher than the normal coolant temperature,
obtain route data of a route for the fuel cell vehicle, the route data comprising at least one section of the route wherein switching from the hot operating mode to the normal operating mode can be performed while the fuel cell system can generate the required value of a traction power for the fuel cell vehicle for the at least one section of the route; and
when it is determined that the SoH of the fuel cell stack is within a target SoH and the fuel cell vehicle assumes the hot operating mode, the processing circuitry being configured to:
- in response to determining that an expected degradation of the fuel cell stack due to switching between the hot operating mode and the normal operating mode when passing the at least one section of the route is lower than an expected degradation of the fuel cell stack due to the fuel cell vehicle remaining operating in the hot operating mode when passing the at least one section of the route, provide the second instruction to the fuel cell vehicle to assume the normal operating mode during the at least one section of the route.

2. The fuel cell vehicle of claim 1, wherein the processing circuitry is further configured to:
- in response to determining that the expected degradation of the fuel cell stack due to switching between the hot operating mode and the normal operating mode when passing the at least one section of the route is greater than or equal to the expected degradation of the fuel cell stack due to the fuel cell vehicle remaining operating in the hot operating mode when passing the at least one section of the route, control the fuel cell vehicle to maintain the hot operating mode during the at least one section of the route.

3. The fuel cell vehicle of claim 1 or claim 2, wherein the processing circuitry is further configured to:
- in response to determining that the expected degradation of the fuel cell stack due to switching from the hot operating mode to the normal operating mode when entering at least one lower power demand portion of the at least one section of the route and switching from the normal operating mode to the hot operating mode when exiting the at least one lower power demand portion of the at least one section of the route is lower than the expected degradation of the fuel cell stack due to the fuel cell vehicle remaining operating in the hot operating mode when passing the at least one section of the route, provide the second instruction to the fuel cell vehicle to assume the normal operating mode during the at least one section of the route.

4. The fuel cell vehicle of claim 3, wherein the processing circuitry is further configured to:
- in response to determining that the expected degradation of the fuel cell stack due to switching from the hot operating mode to the normal operating mode when entering the at least one lower power demand portion of the at least one section of the route and switching from the normal operating mode to the hot operating mode when exiting the at least one lower power demand portion of the at least one section of the route is greater than or equal to the expected degradation of the fuel cell stack due to the fuel cell vehicle remaining operating in the hot operating mode when passing the at least one section of the route, control the fuel cell vehicle to maintain the hot operating mode during the at least one section of the route.

5. The fuel cell vehicle of any one of claims 3 to 4, wherein the processing circuitry is further configured to:
- provide the first instruction to the fuel cell vehicle to assume the hot operating mode when exiting the at least one lower power demand portion of the at least one section of the route.

6. A method (400) of controlling operation of a fuel cell vehicle comprising a fuel cell system comprising at least one fuel cell stack configured to generate traction power for the fuel cell vehicle and a cooling system configured to pass a coolant through the fuel cell stack to dissipate heat generated by the fuel cell stack, the method comprising:
determining (402) a required value of a current or predicted traction power for the fuel cell vehicle;
obtaining (416) a state of health, SoH, of the fuel cell stack;
obtaining (428) route data of a route for the fuel cell vehicle, the route data comprising at least one section of the route wherein switching from a hot operating mode to a normal operating mode can be performed while the fuel cell system can generate the required value of a traction power for the fuel cell vehicle for the at least one section of the route, wherein in the hot operating mode a coolant inlet temperature of the coolant passing through the cooling system comprises a hot coolant temperature and in the normal operating mode the coolant inlet temperature comprises a normal coolant temperature, and wherein the hot coolant temperature is higher than the normal coolant temperature; and
when it is determined (418) that the SoH of the fuel cell stack is within a target SoH and the fuel cell vehicle assumes the hot operating mode,
- in response to determining (436) that an expected degradation of the fuel cell stack due to switching between the hot operating mode and the normal operating mode when passing the at least one section of the route is lower than an expected degradation of the fuel cell stack due to the fuel cell vehicle remaining operating in the hot operating mode when passing the at least one section of the route, providing (438) a second instruction to the fuel cell vehicle to assume the normal operating mode during the at least one section of the route.

7. The method of claim 6, further comprising:
- in response to determining that the expected degradation of the fuel cell stack due to switching between the hot operating mode and the normal operating mode when passing the at least one section of the route is greater than or equal to the expected degradation of the fuel cell stack due to the fuel cell vehicle remaining operating in the hot operating mode when passing the at least one section of the route, controlling (440) the fuel cell vehicle to maintain the hot operating mode during the at least one section of the route.

8. The method of claim 6 or claim 7, further comprising:
- in response to determining that the expected degradation of the fuel cell stack due to switching from the hot operating mode to the normal operating mode when entering at least one lower power demand portion of the at least one section of the route and switching from the normal operating mode to the hot operating mode when exiting the at least one lower power demand portion of the at least one section of the route is lower than the expected degradation of the fuel cell stack due to the fuel cell vehicle remaining operating in the hot operating mode when passing the at least one section of the route, providing (438) the second instruction to the fuel cell vehicle to assume the normal operating mode during the at least one section of the route.

9. The method of claim 8, further comprising:
- in response to determining that the expected degradation of the fuel cell stack due to switching from the hot operating mode to the normal operating mode when entering the at least one lower power demand portion of the at least one section of the route and switching from the normal operating mode to the hot operating mode when exiting the at least one lower power demand portion of the at least one section of the route is greater than or equal to the expected degradation of the fuel cell stack due to the fuel cell vehicle remaining operating in the hot operating mode when passing the at least one section of the route, controlling (440) the fuel cell vehicle to maintain the hot operating mode during the at least one section of the route.

10. The method of any one of claims 8 to 9, further comprising:
- providing (439) the first instruction to the fuel cell vehicle to assume the hot operating mode when exiting the at least one lower power demand portion of the at least one section of the route.

11. The method of any one of claims 6 to 10, further comprising:
when it is determined (418) that the SoH of the fuel cell stack is within the target SoH and prior to obtaining the route data of the route for the fuel cell vehicle,
- determining (422) whether an accumulated total time the fuel cell vehicle has assumed the hot operating mode is below an accumulated time threshold; and
- responsive to determining that the accumulated total time the fuel cell vehicle has assumed the hot operating mode is below the accumulated time threshold, estimating (424) a percentage of a duration of time the fuel cell vehicle has assumed the hot operating mode over a total lifetime of the fuel cell vehicle,
wherein the route data is obtained responsive to determining (426) that the estimated percentage of the duration of time the fuel cell vehicle has operated in the hot operating mode over the total lifetime of the fuel cell vehicle is below a hot mode ratio threshold for the fuel cell vehicle.

12. The method of any one of claims 6 to 11, further comprising:
prior to obtaining the SoH of the fuel cell stack and the route data,
selecting (408) the hot operating mode for the fuel cell vehicle when the required value of the traction power is above a traction power threshold, wherein selecting the hot operating mode further comprises selecting among a fuel saving operating mode of the fuel cell vehicle and an increased power operating mode of the fuel cell vehicle, wherein the fuel saving operating mode and the increased power operating mode are respective types of the hot operating mode; and/or when the fuel saving operating mode is selected,
comparing (412) an estimated benefit for fuel consumption by the fuel cell stack for an estimated duration of time for the fuel cell vehicle to operate in the fuel saving operating mode and a minimum fuel consumption decrease; and
controlling the fuel cell vehicle to operate in the hot operating mode comprising the fuel saving operating mode when the estimated benefit for fuel consumption by the fuel cell stack is greater than the minimum fuel consumption decrease.

13. A vehicle controller (30) comprising processing circuitry (32) that is configured to perform a method in accordance with any one of claims 6 to 12.

14. A computer program product comprising computer-executable instructions, which, when executed by processing circuitry, cause the processing circuitry to perform the method of any one of claims 6 to 12.

15. A tangible non-transitory computer-readable storage medium, having stored thereon a computer program product comprising computer-executable instructions which, when executed by processing circuitry, cause the processing circuitry to perform the method of any one of claims 6 to 12.
